# EUROPEAN PATENT APPLICATION

(11) **EP 4 617 101 A1**
(43) Date of publication of application: **17.09.2025**
(21) Application number: 25158340.7
(22) Date of filing: 17.02.2025
(51) Int. Cl.: B60L 1/00, B60K 1/02, B60L 3/04, B60L 3/12, B60L 15/20, B60L 50/51

(54) **WORK VEHICLE**

(30) Priority: 08.03.2024 JP 2024036075
(71) Applicant: Yanmar Holdings Co., Ltd., Osaka-shi, Osaka (JP)
(72) Inventor: KODAMA, Maroi, Okayama (JP); SUZUKI, Shogo, Okayama (JP); ISHIDA, Tomoki, Okayama (JP)
(74) Representative: Novagraaf International SA

(57) **Abstract**

[Problem] The present invention provides a technique capable of ensuring a straight travel property of a work vehicle even when some of straight-travel power is input to a turning power transmission path that is coupled to a turning electric motor.

[Solution] The work vehicle includes a straight-travel electric motor that generates the straight-travel power and a turning electric motor that generates turning power. The during straight travel by driving the straight-travel electric motor, when differing from a target rotational speed of the turning electric motor, a rotational speed of the turning electric motor returns to a target rotational speed of the turning electric motor.

## Description

### TECHNICAL FIELD

The present invention relates to a work vehicle.

### BACKGROUND ART

As the related art, a work vehicle that includes an electric motor as a travel drive source has been known (see Patent Document 1, for example).

### PRIOR ART DOCUMENT

### PATENT DOCUMENT

Patent Document 1: Japanese Unexamined Patent Application Publication No. 2020-48585

### SUMMARY OF INVENTION

### TECHNICAL PROBLEM

By the way, the following work vehicle has also been proposed in recent years. The work vehicle includes: a straight-travel electric motor that generates straight-travel power; and a turning electric motor that generates turning power. There is a case where, when such a work vehicle is traveling straight by driving the straight-travel electric motor, some of the straight-travel power is unintentionally input to a turning power transmission path that is coupled to the turning electric motor. In such a case, this power may function as the turning power. In this case, the unintentional turning power is generated, which may hinder straight travel of the work vehicle.

The present invention has been made to solve the above problem, and an object of the present invention is to provide a technique capable of ensuring a straight travel property of a work vehicle even when some of straight-travel power is input to a turning power transmission path that is coupled to a turning electric motor.

### SOLUTION TO PROBLEM

A work vehicle according to an aspect of the present invention includes: a straight-travel electric motor that generates straight-travel power; and a turning electric motor that generates turning power. During straight travel by driving the straight-travel electric motor, a rotational speed of the turning electric motor returns to a target rotational speed of the turning electric motor when becoming different from the target rotational speed.

### ADVANTAGEOUS EFFECTS OF INVENTION

According to the above configuration, even when some of the straight-travel power is input to a turning power transmission path that is coupled to the turning electric power, a straight travel property of the work vehicle can be ensured.

### BRIEF DESCRIPTION OF DRAWINGS

FIG. 1 is a view illustrating a schematic configuration of a work vehicle according to an embodiment of the present invention.
FIG. 2 is a schematic view illustrating a configuration of a travel drive unit provided in the work vehicle.
FIG. 3 is a block diagram schematically illustrating a configuration of an electric system in the work vehicle.
FIG. 4 is a block diagram schematically illustrating a configuration of a control system in the work vehicle.
FIG. 5 is an explanatory view illustrating a state of a turning electric motor in the travel drive unit.
FIG. 6 is a flowchart illustrating a flow of control related to the turning electric motor during straight travel of the work vehicle.
FIG. 7 is an explanatory view illustrating a modified example of the state of the turning electric motor.
FIG. 8 is a flowchart illustrating a flow of a modified example of the control related to the turning electric motor during the straight travel of the work vehicle.

### DESCRIPTION OF EMBODIMENTS

An embodiment of the present invention will be described below with reference to the drawings.

### [1. Schematic Configuration of Work Vehicle]

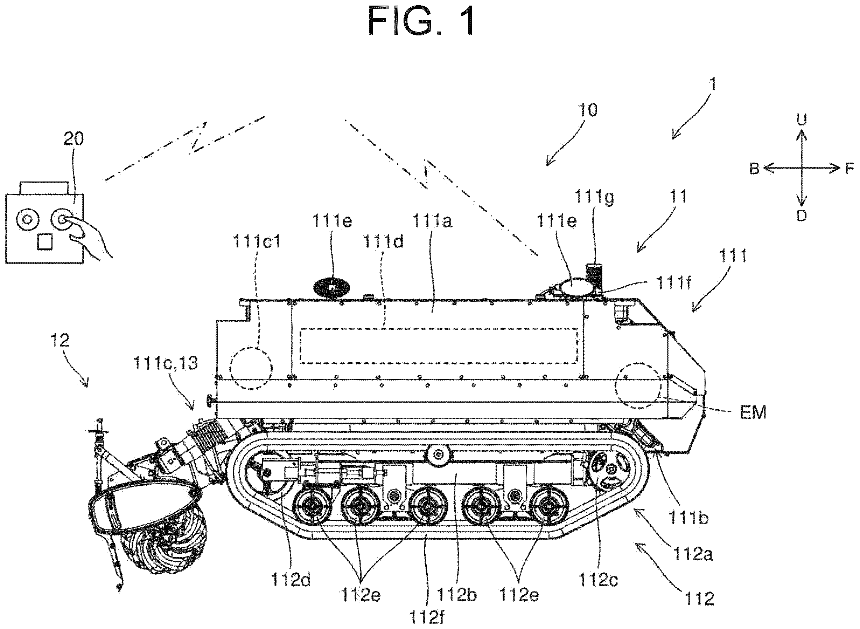

FIG. 1 is a view illustrating a schematic configuration of a work vehicle 1 according to the embodiment of the present invention. The work vehicle 1 is used to perform work such as agricultural work or construction work. The work vehicle 1 includes a vehicle body 10 and a remote operation device 20 that is provided separately from the vehicle body 10. The vehicle body 10 includes: a travel machine body 11 that travels on the ground; and a work machine 12 that is coupled to the travel machine body 11.

The remote operation device 20 (also referred to as a remote maneuvering device) enables an operation of the vehicle body 10 by an operator who is located away from the vehicle body 10. That is, the vehicle body 10 is remotely operated by the remote operation device 20. In addition, travel of the vehicle body 10 operated by the remote operation device 20, that is, manually operated by the operator is referred to as manual travel.

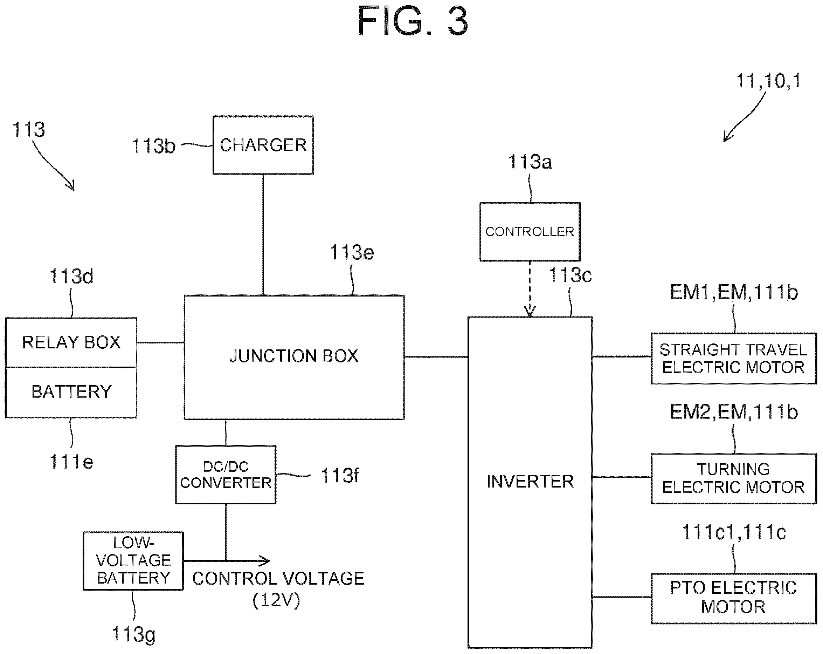

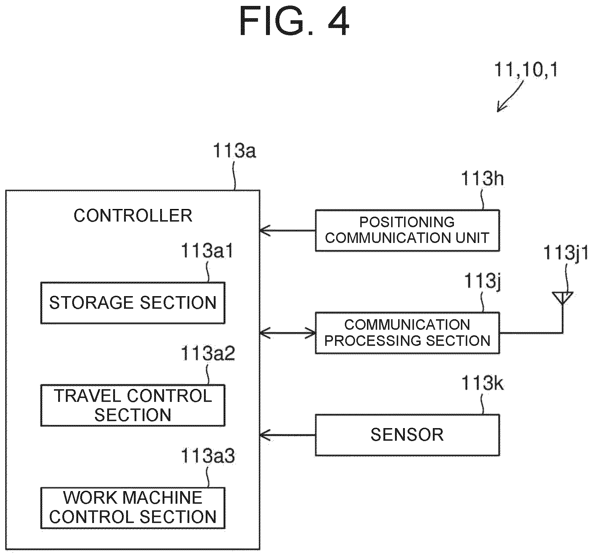

In the present embodiment, the work vehicle 1 is configured to be able to travel by automatic travel in addition to the manual travel described above. The above automatic travel means that a travel-related device (for example, a travel drive unit 111b described below) is controlled by a controller 113a (see FIGs. 3 and 4), which is provided in the work vehicle 1 and described below, and thus the work vehicle 1 is at least steered autonomously such that the work vehicle 1 travels along a predetermined route. For example, the automatic travel may be configured that, in addition to steering, at least one of adjustment of a travel speed (also simply referred to as a speed) and work by the work machine 12 is performed autonomously. The configuration of the work vehicle 1 is not limited to the above. For example, the manual travel of the work vehicle 1 is enabled while the automatic travel thereof is disabled. Alternatively, the automatic travel of the work vehicle 1 is enabled while the manual travel thereof is disabled.

Here, directions (in particular, directions related to the vehicle body 10) used in the description are defined as follows. A direction in which the travel machine body 11 and the work machine 12 are aligned is set as a front-rear direction, a direction in which the work machine 12 is located when seen from the travel machine body 11 is set as "rear", and an opposite direction thereof is set as "front". In addition, a left side and a right side from the rear side toward the front are defined as "left" and "right", respectively. Furthermore, a direction of a gravitational force that is perpendicular to the front-rear direction and a left-right direction is defined as an up-down direction, and an upstream side and a downstream side in the direction of the gravitational force are defined as "up" and "down", respectively. In the drawings, the front side, the rear side, the right side, the left side, the up side, and the down side are denoted by the symbols "F", "B", "R", "L", "U", and "D", respectively, when necessary. These directions are names used merely for the description and are not intended to limit actual positional relationships or directions.

In the present embodiment, the work machine 12 is arranged behind the travel machine body 11. However, the present invention can also be applied to a work vehicle 1 in which the work machine 12 is arranged in front of the travel machine body 11.

The travel machine body 11 includes a machine body main section 111 and a travel section 112 arranged below the machine body main section 111. The machine body main section 111 includes an outer cover 111a, a travel drive unit 111b that is arranged on an inner front side covered with the outer cover 111a, and a work machine drive unit 111c that is arranged on an inner rear side covered with the outer cover 111a.

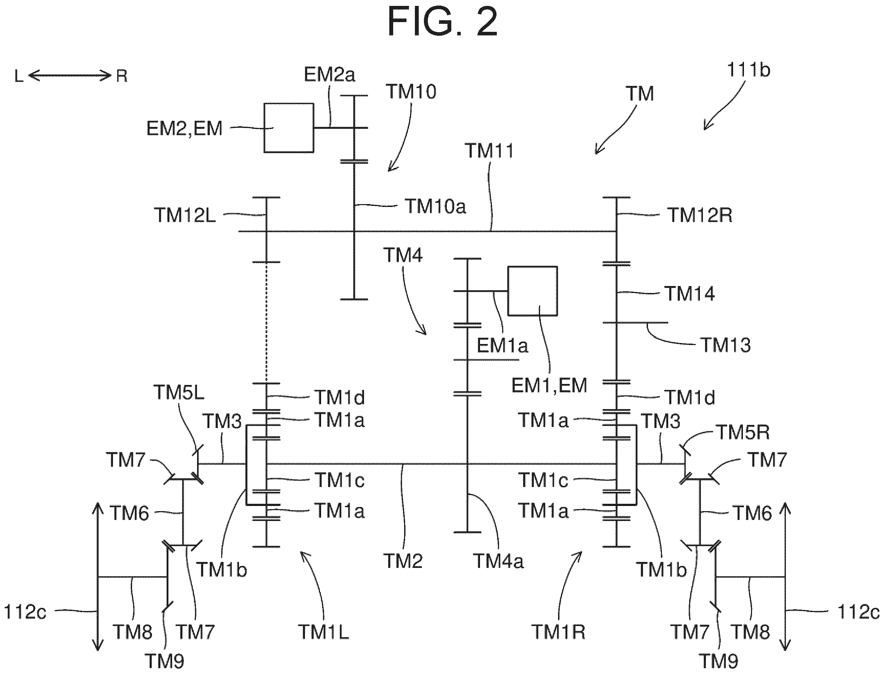

The travel drive unit 111b has: a travel electric motor EM as a drive source; and a travel power transmission section TM (see FIG. 2) that transmits rotary power from the travel electric motor EM to the travel section 112 and will be described below. A configuration of the travel drive unit 111b will be described below. Hereinafter, the "rotary power" will also simply be referred to as "power".

The work machine drive unit 111c has: a power take-off (PTO) electric motor 111d as a drive source; and a PTO power transmission section (not illustrated) that can transmit rotary power from the PTO electric motor 111d to the outside of the travel machine body 11. The drive source that is provided in the work machine drive unit 111c may be other than the electric motor, and may be an engine, for example. In addition, in the present embodiment, the electric motor (the drive source) is provided to each of the travel drive unit 111b and the work machine drive unit 111c. However, it may be configured that the electric motor (the drive source) may be shared by the travel drive unit 111b and the work machine drive unit 111c.

In addition to the travel drive unit 111b and the work machine drive unit 111c, a battery 111d is accommodated in the outer cover 111a. That is, the work vehicle 1 includes the battery 111d. The battery 111d is configured by a lithium-ion battery, for example. The battery 111d may be configured by unitizing plural battery cells or may be configured by a single battery cell.

As an example, a light 111e, a positioning antenna 111f, a warning lamp 111g, and the like are arranged outside the outer cover 111a.

The travel section 112 supports the machine body main section 111 in a manner to allow travel thereof. In detail, the travel section 112 includes a left and right pair of crawlers 112a. Each of the left and right crawlers 112a includes a track frame 112b that extends in the front-rear direction. Each of the track frames 112b is attached to a lower surface of the machine body main section 111. A drive sprocket 112c as a drive wheel is arranged at a front end of the track frame 112b. The power is transmitted from the travel electric motor EM to the drive sprocket 112c via the travel power transmission section TM. A driven sprocket 112d as a driven wheel is arranged at a rear end of the track frame 112b. The driven sprocket 112d is rotatably supported by the track frame 112b. In the track frame 112b, plural rotary wheels 112e are rotatably supported between the drive sprocket 112c and the driven sprocket 112d. A crawler belt 112f is wound around the drive sprocket 112c, the driven sprocket 112d, and the plural rotary wheels 112e to constitute the crawler 112a.

In the present embodiment, the crawler 112a is configured that the single drive wheel (the drive sprocket 112c) and the single driven wheel (the driven sprocket 112d) are aligned in the front-rear direction and the crawler belt 112f is wound therearound. However, the crawler 112a may have another configuration. For example, the crawler may be of a type that the crawler belt is wound in a triangular shape around the single drive wheel and the two driven wheels. In addition, in the present embodiment, the travel section 112 is of a crawler type. However, the travel section 112 may be of a type other than the crawler type, for example, a wheel type.

The work machine 12 is attached to the travel machine body 11 via a hitch section 13 in a manner to be lifted/lowered. The hitch section 13 includes the work machine drive unit 111c. The work machine 12 is attached to the hitch section 13 in a replaceable manner. That is, various types of the work machines 12 can be attached. In FIG. 1, the work machine 12 is a tiller. Instead of the tiller, the work machine 12 may be a plow, a ridger, a fertilizing device, an agricultural chemical spraying device, a harvesting device, a reaper, a snow plow, or the like, for example.

### [2. Configuration of Travel Drive Unit]

A description will be made on a configuration of the travel drive unit 111b with reference to FIG. 2. FIG. 2 is a schematic view illustrating the configuration of the travel drive unit 111b. FIG. 2 only illustrates components that are required to describe features of the present embodiment, and does not illustrate general components.

The travel electric motor EM includes a straight-travel electric motor EM1 and a turning electric motor EM2. That is, the work vehicle 1 includes the straight-travel electric motor EM1 and the turning electric motor EM2. The straight-travel electric motor EM1 and the turning electric motor EM2 are each driven by electric power that is supplied from the battery 111d. In addition, in the machine body main section 111, the straight-travel electric motor EM1 and the turning electric motor EM2 are aligned in the left-right direction. For convenience of description, in FIG. 2, a positional relationship between the straight-travel electric motor EM1 and the turning electric motor EM2 differs from that in the machine body main section 111.

The travel power transmission section TM includes a left and right pair of planetary gear shift mechanisms TM1L, TM1R. The left and right planetary gear shift mechanisms TM1L, TM1R are arranged to be bilaterally symmetrical on a sun shaft TM2. Each of the left and right planetary gear shift mechanisms TM1L, TM1R has plural (for example, three) planetary gears TM1a. In the left planetary gear shift mechanism TM1L, each of the plural planetary gears TM1a is pivotally supported by a planetary carrier TMlb that is arranged on a left side in a freely rotatable manner. In the right planetary gear shift mechanism TM1R, each of the plural planetary gears TM1a is pivotally supported by a planetary carrier TMlb that is arranged on a right side in a freely rotatable manner. In each of the planetary gear shift mechanisms TM1L, TM1R, the plural planetary gears TM1a are located with the same radius around the sun shaft TM2 and arranged to mesh with a sun gear TM1c that is fixed to respective one of left and right ends of the sun shaft TM2.

In each of the left and right planetary transmission mechanisms TM1L, TM1R, a ring gear TM1d is arranged concentrically with the sun shaft TM2. Each of the ring gears TM1d has internal teeth on an inner circumferential surface thereof and has external teeth on an outer circumferential surface thereof. Each of the ring gears TM1d is arranged such that the internal teeth thereof mesh with respective one of the plural planetary gears TM1a. Each of the ring gears TM1d is supported in a freely rotatable manner via a bearing on the sun shaft TM2 or on a center shaft TM3 that protrudes outward in the left-right direction from the planetary carrier TM1b.

Rotary power of an output shaft EM1a of the straight-travel electric motor EM1 is transmitted to the left and right planetary transmission mechanisms TM1L, TM1R via a first gear train TM4 and the sun shaft TM2. The first gear train TM4 is configured to include plural gears. In particular, the first gear train TM4 includes a first center gear TM4a, and the first center gear TM4a is fixed to the sun shaft TM2.

The rotary power that is transmitted to the left planetary gear shift mechanism TM1L is transmitted to a left bevel gear TM5L, which is fixed to a left end portion of the center shaft TM3 of the planetary carrier TM1b, via the planetary carrier TM1b. Similarly, the rotary power that is transmitted to the right planetary gear shift mechanism TM1R is transmitted to a right bevel gear TM5R, which is fixed to a right end portion of the center shaft TM3 of the planetary carrier TM1b, via the planetary carrier TM1b.

The rotary power that is transmitted to the left bevel gear TM5L is transmitted to a relay shaft TM6. In detail, bevel gears TM7 are fixed to both end portions of the relay shaft TM6. The left bevel gear TM5L mesh with one of the bevel gears TM7 in both of the end portions of the relay shaft TM6.

The rotary power that is transmitted to the relay shaft TM6 is transmitted to an external output shaft TM8. In detail, a bevel gear TM9 is fixed to one end portion (a right end portion) of the external output shaft TM8. The other of the bevel gears TM7 in both of the end portions of the relay shaft TM6 meshes with the bevel gear TM9 on the external output shaft TM8. The left drive sprocket 112c (also see FIG. 1) is fixed to the other end portion (a left end portion) of the external output shaft TM8.

Similarly, the rotary power that is transmitted to the right bevel gear TM5R is transmitted to a relay shaft TM6. In detail, bevel gears TM7 are fixed to both end portions of the relay shaft TM6. The right bevel gear TM5R meshes with one of the bevel gears TM7 in both of the end portions of the relay shaft TM6.

The rotary power that is transmitted to the relay shaft TM6 is transmitted to an external output shaft TM8. In detail, a bevel gear TM9 is fixed to one end portion (a left end portion) of the external output shaft TM8. The other of the bevel gears TM7 in both of the end portions of the relay shaft TM6 meshes with the bevel gear TM9 on the external output shaft TM8. The right drive sprocket 112c is fixed to the other end portion (a right end portion) of the external output shaft TM8.

Rotary power of an output shaft EM2a of the turning electric motor EM2 is transmitted to a steering shaft TM11 via a second gear train TM10. The second gear train TM10 is configured to include plural gears. In particular, the second gear train TM10 includes a second center gear TM10a, and the second center gear TM10a is fixed to the steering shaft TM11.

The rotary power that is transmitted to the steering shaft TM11 via the second gear train TM10 is transmitted to the left and right planetary gear shift mechanisms TM1L, TM1R. In detail, a left transmission gear TM12L that is fixed to a left end portion of the steering shaft TM11 meshes with the external teeth of the ring gear TM1d of the left planetary gear shift mechanism TM1L. Accordingly, the rotary power that is transmitted to the steering shaft TM11 is directly transmitted to the ring gear TM1d of the left planetary gear shift mechanism TM1L. Meanwhile, a right transmission gear TM12R that is fixed to a right end portion of the steering shaft TM11 meshes with a reverse gear TM14 attached to a reverse shaft TM13. This reverse gear TM14 meshes with the external teeth of the ring gear TM1d of the right planetary gear shift mechanism TM1R. Accordingly, the rotary power that is transmitted to the steering shaft TM11 is transmitted to the ring gear TM1d of the right planetary gear shift mechanism TM1R after a rotational direction of the rotary power is reversed by the reverse gear TM14.

For example, in a state where the rotation of the straight-travel electric motor EM1 is stopped, the sun shaft TM2 and the sun gears TM1c on both of the left and right sides are fixed. In the present embodiment, the "rotation of the straight-travel electric motor EM1" means "rotation of the output shaft EM1a of the straight-travel electric motor EM1". Similarly, "rotation of the turning electric motor EM2" means "rotation of the output shaft EM2a of the turning electric motor EM2".

Accordingly, the left and right ring gears TM1d rotate at the same rotational speed in mutually opposite directions during forward rotation (or during reverse rotation) of the turning electric motor EM2. Here, it is assumed that the left ring gear TM1d rotates in a forward direction while the right ring gear TM1d rotates in a reverse direction. In this case, the planetary gear TM1a and the planetary carrier TMlb on the left side rotate forward about the sun shaft TM2 while the planetary gear TM1a and the planetary carrier TMlb on the right side rotate reversely about the sun shaft TM2. Accordingly, the external output shaft TM8, to which the rotary power is transmitted from the center shaft TM3 of the left planetary carrier TMlb via the relay shaft TM6, rotates forward, and the external output shaft TM8, to which the rotary power is transmitted from the center shaft TM3 of the right planetary carrier TMlb via the relay shaft TM6, rotates reversely. Consequently, the left crawler 112a (see FIG. 1) moves forward, and the right crawler 112a moves rearward. In this case, the work vehicle 1 spins and turns to the right on the spot. That is, the turning electric motor EM2 generates turning power.

Meanwhile, when the straight-travel electric motor EM1 rotates, as described above, the rotary power of the straight-travel electric motor EM1 is transmitted to the sun shaft TM2. In the case where the rotation of the turning electric motor EM2 is stopped (more specifically, the output shaft EM2a of the turning electric motor EM2 is fixed), the ring gears TM1d on both of the left and right sides stop rotating and are fixed. Accordingly, the rotary power that is transmitted to the sun shaft TM2 is equally transmitted to the left external output shaft TM8 and the right external output shaft TM8 via the left and right planetary gear shift mechanisms TM1L, TM1R, respectively. Consequently, the left and right drive sprockets 112c rotate in the same rotational direction at the same rotational speed, and the work vehicle 1 thus travels straight. That is, the work vehicle 1 moves forward or rearward according to the rotational direction of the straight-travel electric motor EM1. Thus, the straight-travel electric motor EM1 generates straight-travel power.

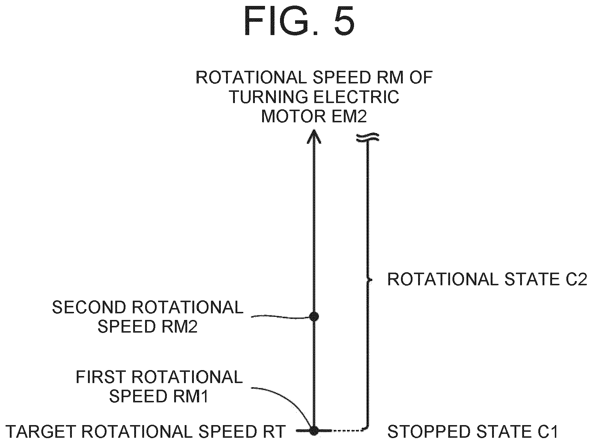

Based on the above-described principle, the rotational speed and the rotational direction of the straight-travel electric motor EM1 and a rotational speed RM (see FIG. 5) and the rotational direction of the turning electric motor EM2 are appropriately combined and controlled. In this way, the work vehicle 1 can travel. In the present embodiment, the travel of the work vehicle 1 includes straight travel and turning travel. The straight travel of the work vehicle 1 means that the work vehicle 1 simply moves forward or rearward. The turning travel of the work vehicle 1 means that the work vehicle 1 turns left or right while moving forward or rearward, in addition to that the work vehicle 1 spin-turns to the left or right on the spot.

However, in the case where the turning electric motor EM2 (more specifically, the output shaft EM2a) is freely rotatable (in a non-fixed state) during the straight travel of the work vehicle 1, that is, during the rotation of the straight-travel electric motor EM1, the ring gears TM1d on both of the left and right sides are also freely rotatable. In this state, for example, when one of the left and right crawlers 112a is caught on the ground and resistance thereof is increased (driving thereof becomes difficult), the rotary power (of the straight-travel electric motor EM1) that is transmitted to the sun shaft TM2 is no longer equally transmitted to the left and right external output shafts TM8.

As an example, it is assumed that the resistance of the left crawler 112a is increased. In such a case, of the rotary power that has been transmitted to the sun shaft TM2, at least some of the rotary power transmitted to the left planetary gear shift mechanism TM1L is transmitted to the right planetary gear shift mechanism TM1R via the left transmission gear TM12L, the steering shaft TM11, the right transmission gear TM12R, and the reverse gear TM14. That is, the straight-travel power is input to a turning power transmission path. In this way, the rotary power that is directly transmitted from the sun shaft TM2 and the rotary power that is transmitted via the steering shaft TM11 and the like are combined and transmitted to the right external output shaft TM8. As a result, the rotational speed of the right drive sprocket 112c (crawler 112a) becomes higher than that of the left drive sprocket 112c (crawler 112a), and the work vehicle 1 thereby turns to the left. That is, due to the input of the straight-travel power to the turning power transmission path, the unintentional turning power is generated, which hinders the straight travel of the work vehicle 1. At this time, since the steering shaft TM11 rotates, the (freely rotatable) turning electric motor EM2 rotates (via the second gear train TM10).

The rotational speed and the rotational direction of the straight-travel electric motor EM1 and the rotational speed RM and the rotational direction of the turning electric motor EM2 are adjusted by operating an operation section (not illustrated) that includes a lever or the like provided in the remote operation device 20.

### [3. Configuration of Electric System in Work Vehicle]

A description will be made on a configuration of an electric system in the work vehicle 1 with reference to FIG. 3. FIG. 3 is a block diagram schematically illustrating the configuration of the electric system in the work vehicle 1.

The work vehicle 1 includes plural electric devices 113. The plural electric devices 113 include a controller 113a, a charger 113b, an inverter 113c, a relay box 113d, a junction box 113e, a DC/DC converter 113f, and a low-voltage battery 113g. The plural electric devices 113 are arranged in the machine body main section 111 (see FIG. 1) of the travel machine body 11.

The plural electric devices 113 are supplied with the electric power from the battery 111d. In detail, each of the devices that are included in the plural electric devices 113 is either directly connected to the battery 111d or electrically connected to the battery 111d via another device included in the plural electric devices 113. For example, the relay box 113d that is included in the plural electric devices 113 is directly connected to the battery 111d. In addition, the inverter 113c that is included in the plural electric devices 113 is electrically connected to the battery 111d via the relay box 113d and the junction box 113e.

The controller 113a is a computer device that electrically controls each section of the work vehicle 1. A configuration of the controller 113a will be described below. The charger 113b converts an AC voltage supplied from an external power supply (not illustrated) via a charging cable (not illustrated) into a DC voltage. A charging port (not illustrated), to which the above charging cable is connected, is provided in the machine body main section 111 of the travel machine body 11.

The inverter 113c converts the DC voltage supplied from the battery 111d into the AC voltage, and supplies the AC voltage to the straight-travel electric motor EM1, the turning electric motor EM2, and the PTO electric motor 111c1. In this way, the straight-travel electric motor EM1, the turning electric motor EM2, and the PTO electric motor 111c1 are driven. The AC voltage is supplied from the inverter 113c to the straight-travel electric motor EM1, the turning electric motor EM2, and the PTO electric motor 111c1 on the basis of a rotation command that is output from the controller 113a.

The relay box 113d is a battery control unit that controls an internal battery relay and thereby controls input/output of the battery 111d. The junction box 113e is configured to include a charger relay, an inverter relay, a fuse, and the like. The voltage that is output from the charger 113b is supplied to the battery 111d via the junction box 113e and the relay box 113d. In this way, the battery 111d stores the electric power. The voltage that is output from the battery 111d is also supplied to the inverter 113c via the relay box 113d and the junction box 113e. That is, for example, the electric power that is stored in the battery 111d is supplied to the turning electric motor EM2 via the relay box 113d, the junction box 113e, and the inverter 113c.

The DC/DC converter 113f (also simply referred to as a converter) steps down the DC voltage, which is a high voltage (for example, 350 V) supplied from the battery 111d via the junction box 113e, to a low voltage (for example, 12 V). The low-voltage battery 113g is configured by a lead battery, for example. The low-voltage battery 113g is connected to the DC/DC converter 113f and stores the electric power, the voltage of which has been stepped down by the DC/DC converter 113f.

### [4. Configuration of Control System in Work Vehicle]

A description will be made on a configuration of a control system in the work vehicle 1 with reference to FIG. 4. FIG. 4 is a block diagram schematically illustrating the configuration of the control system in the work vehicle 1. FIG. 4 only illustrates components that are required to describe the features of the present embodiment, and does not illustrate the general components.

The controller 113a is configured to include an arithmetic device, an input/output section, and a storage section 113a1, for example. The arithmetic device is a processor or a microprocessor, for example. The storage section 113a1 is a main storage device such as read only memory (ROM) or random access memory (RAM). The storage section 113a1 may further include an auxiliary storage device such as a hard disk drive (HDD) or a solid state drive (SSD). The storage section 113a1 stores various programs, data, and the like. The arithmetic device reads out the various programs from the storage section 113a1 and executes arithmetic processing according to each of the programs. Each of the programs stored in the storage section 113a1 may be provided by a non-volatile computer-readable recording medium, for example. As another example, each of the programs may be provided from a program providing server via a communication line such as the Internet.

The controller 113a can be operated as a travel control section 113a2 and a work machine control section 113a3 by cooperation of the above-described hardware and software. The controller 113a may be configured by a single piece of the hardware, or may be configured by plural pieces of the hardware that are mutually communicable.

As described above, the travel control section 113a2 and the work machine control section 113a3 provided in the controller 113a may each be realized by causing the arithmetic device to execute the arithmetic processing according to the program, that is, by the software, but may be realized by another method. At least one of the travel control section 113a2 and the work machine control section 113a3 may be realized by using an application-specific integrated circuit (ASIC), a field-programmable gate array (FPGA), or the like, for example. That is, at least one of the travel control section 113a2 and the work machine control section 113a3 may be realized by the hardware using a dedicated IC or the like. Alternatively, at least one of the travel control section 113a2 and the work machine control section 113a3 may be realized by using both of the software and the hardware. Each of the travel control section 113a2 and the work machine control section 113a3 is a conceptual component. Accordingly, a function implemented by a single component may be distributed to plural components, or functions provided to the plural components may be integrated into the single component.

The travel control section 113a2 controls the travel drive unit 111b, in particular, the straight-travel electric motor EM1 and the turning electric motor EM2 (via the inverters 113c) according to whether the work vehicle 1 is traveling manually or automatically. In detail, during the manual travel, the travel control section 113a2 controls the straight-travel electric motor EM1 and the turning electric motor EM2 on the basis of a travel instruction from the remote operation device 20 (see FIG. 1). During the automatic travel, the travel control section 113a2 automatically (autonomously) controls the straight-travel electric motor EM1 and the turning electric motor EM2 such that the travel machine body 11 travels along a predetermined route.

The work machine control section 113a3 adjusts a lifted/lowered position (a height from the ground) of the work machine 12 on the basis of a lifting/lowering instruction from the remote operation device 20. In addition, the work machine control section 113a3 controls the work machine drive unit 111c on the basis of a switching instruction from the remote operation device 20, and thereby controls switching of power transmission to the work machine 12.

A positioning communication unit 113h, a communication processing unit 113j, and a sensor 113k are connected to the controller 113a. The positioning communication unit 113h, the communication processing unit 113j, and the sensor 113k are included in the plural electric devices 113 (see FIG. 3).

The positioning communication unit 113h includes the positioning antenna 111f (see FIG. 1), and acquires a position of the vehicle body 10 as information on latitude and longitude, for example, by using a positioning signal received by the positioning antenna 111f from a positioning satellite. For example, the positioning communication unit 113h receives the positioning signal from a reference station (not illustrated) by an appropriate method, and then performs positioning by using a known real-time kinematic GNSS (RTK-GNSS) method. The positioning communication unit 113h outputs positional information of the vehicle body 10 to the controller 113a. However, the positioning communication unit 113h may perform positioning by using another method such as a differential GNSS (DGNSS) method. In addition, the work vehicle 1 may be configured to include a quantum compass capable of positioning, for example, instead of or in addition to the positioning communication unit 113h.

The communication processing unit 113j communicates with the remote operation device 20 via a communication antenna 113j1. The communication antenna 113j1 is an antenna for wireless communication with the remote operation device 20. For the wireless communication, a wireless local area network (LAN) such as Wi-Fi^{®} may be used.

The sensor 113k detects information on the vehicle body 10 and outputs the detected information to the controller 113a. In the present embodiment, the sensor 113k includes plural types of sensors. Each of the plural types of the sensors is connected to the controller 113a in a manner to be able to input a signal. For example, the plural types of the sensors include an inertial measurement unit, an obstacle sensor, a speed sensor, a lifted/lowered position sensor, a rotational speed sensor, and the like.

The inertial measurement unit is a unit that includes a three-axis angular velocity sensor and a three-directional acceleration sensor and can measure a posture of the travel machine body 11. The obstacle sensor is a sensor that detects an obstacle that is present around the vehicle body 10, and may be an ultrasonic sensor, a camera, a radar, light detection and ranging (LiDAR), or the like, for example. The speed sensor is a sensor that detects a speed of the travel machine body 11. The lifted/lowered position sensor is a sensor that detects the lifted/lowered position (the height from the ground) of the work machine 12. The rotational speed sensor is a sensor that detects a rotational speed of an output shaft of an electric motor (for example, the output shaft EM2a of the turning electric motor EM2).

The positioning communication unit 113h and some of the sensors 113k (for example, the inertial measurement unit) are used when the work vehicle 1 travels automatically. That is, the positioning communication unit 113h and some of the sensors 113k are not essential for the work vehicle 1 to travel on the basis of the instruction from the remote operation device 20.

### [5. Control Related to Turning Electric Motor During Straight Travel]

A description will be made on control related to the turning electric motor EM2 during the straight travel of the work vehicle 1 (in particular, the travel machine body 11). First, a description will be made on a state of the turning electric motor EM2 with reference to FIG. 5. FIG. 5 is an explanatory view illustrating the state of the turning electric motor EM2.

There are a stopped state C1 and a rotational state C2 of the turning electric motor EM2 according to a rotational speed RM (also referred to as an actual rotational speed) of the turning electric motor EM2, more specifically, the output shaft EM2a (see FIG. 2) of the turning electric motor EM2. In the present embodiment, the "rotational speed RM of the output shaft EM2a of the turning electric motor EM2" is also simply referred to as the "rotational speed RM of the turning electric motor EM2". In addition, a "rotational speed of the output shaft EM1a of the straight-travel electric motor EM1" is also simply referred to as a "rotational speed of the straight-travel electric motor EM1".

The stopped state C1 includes a state where the turning electric motor EM2, more specifically, the output shaft EM2a of the turning electric motor EM2 is stopped. In the present embodiment, when the work vehicle 1 travels straight, a target rotational speed RT of the turning electric motor EM2 is 0 rpm. Accordingly, in the present embodiment, the stopped state C1 includes a state where the rotational speed RM of the turning electric motor EM2 matches the target rotational speed RT (for example, see a first rotational speed RM1 in FIG. 5).

The rotational state C2 includes a state where the turning electric motor EM2, more specifically, the output shaft EM2a of the turning electric motor EM2 is rotating. In the present embodiment, when the work vehicle 1 travels straight, the rotational state C2 includes a state where the rotational speed RM of the turning electric motor EM2 differs from the target rotational speed RT (0rpm in the present embodiment) (for example, see a second rotational speed RM2 in FIG. 5). That is, it can also be said that the rotational state C2 is a state where there is a difference between the rotational speed RM of the turning electric motor EM2 and the target rotational speed RT.

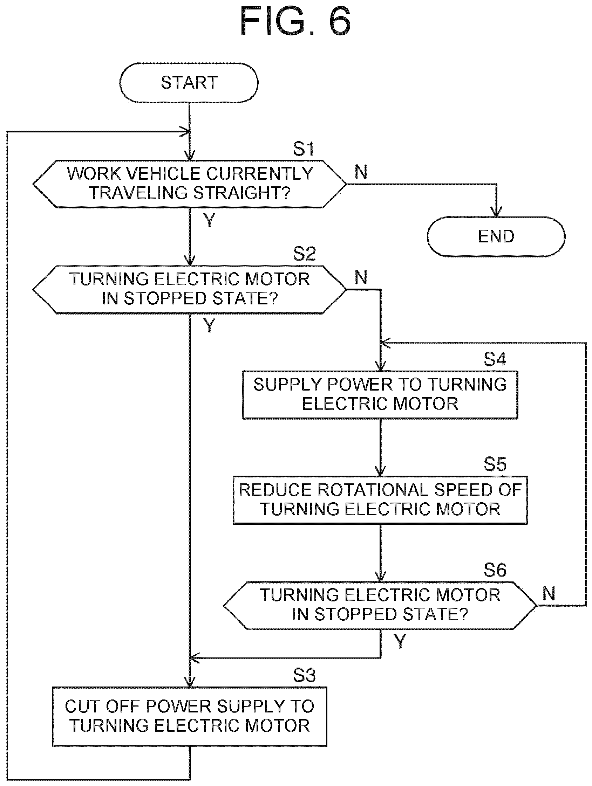

Next, a description will be made on a flow of the control related to the turning electric motor EM2 during the straight travel of the work vehicle 1 with reference to FIG. 6. FIG. 6 is a flowchart illustrating the flow of the control related to the turning electric motor EM2 during the straight travel of the work vehicle 1. The flowchart illustrated in FIG. 6 is initiated at timing at which the work vehicle 1 is activated, for example.

In step S1, the travel control section 113a2 (see FIG. 4) determines whether the work vehicle 1 is traveling straight. In the present embodiment, conditions for the above determination include that a target rotational speed of the straight-travel electric motor EM1 is other than 0 rpm and that the target rotational speed RT (see FIG. 5) of the turning electric motor EM2 is 0 rpm. However, the condition that the target rotational speed of the straight-travel electric motor EM1 is other than 0 rpm may be excluded from the conditions for the determination. As described above, the target rotational speed of the straight-travel electric motor EM1 and the target rotational speed RT of the turning electric motor EM2 are adjusted by operating the above operation section provided in the remote operation device 20.

In the case where the determination conditions are satisfied (in the case where the work vehicle 1 is traveling straight), the electric power is supplied from the battery 111d to the straight-travel electric motor EM1 according to a target rotational speed. Thus, the straight-travel electric motor EM1 is rotating (driven). Meanwhile, the electric power supply from the battery 111d to the turning electric motor EM2 is cut off. When the electric power supply is cut off, the turning electric motor EM2 (more specifically, the output shaft EM2a of the turning electric motor EM2) becomes freely rotatable. Accordingly, the turning electric motor EM2 does not rotate (is not driven) and is in the stopped state C1 (see FIG. 5).

If the work vehicle 1 is traveling straight (Yes in step S1), the processing proceeds to next step S2. If the work vehicle 1 is not traveling straight, that is, if the work vehicle 1 is stopped or turning (No in step S1), this flowchart is terminated.

In step S2, the travel control section 113a2 determines whether the turning electric motor EM2 is in the stopped state C1. In the present embodiment, whether the turning electric motor EM2 is in the stopped state C1 is determined on the basis of the rotational speed RM (the actual rotational speed) of the turning electric motor EM2, which is detected by the rotational speed sensor included in the sensors 113k (see FIG. 4). In detail, in the case where the rotational speed RM of the turning electric motor EM2, which is detected by the rotational speed sensor, matches the target rotational speed RT of the turning electric motor EM2 (0 rpm in the present embodiment), it is determined that the turning electric motor EM2 is in the stopped state C1. On the other hand, in the case where there is the difference between the rotational speed RM of the turning electric motor EM2 and the target rotational speed RT of the turning electric motor EM2 (0 rpm in the present embodiment), it is determined that the turning electric motor EM2 is not in the stopped state C1, that is, in the rotational state C2. If the turning electric motor EM2 is in the stopped state C1 (Yes in step S2), the processing proceeds to step S3. If the turning electric motor EM2 is not in the stopped state C1 (No in step S2), the processing proceeds to step S4.

In step S3, the travel control section 113a2 controls the inverters 113c (see FIG. 3) to cut off the electric power supply from the inverters 113c to the turning electric motor EM2. That is, the electric power supply from the battery 111d to the turning electric motor EM2 is cut off in the stopped state C1 during the straight travel of the work vehicle 1. As described above, when the electric power supply to the turning electric motor EM2 is cut off, the turning electric motor EM2 (more specifically, the output shaft EM2a of the turning electric motor EM2) becomes freely rotatable. Thus, for example, the steering shaft TM11, which is coupled to the output shaft EM2a of the turning electric motor EM2 via the second gear train TM10, also becomes freely rotatable (see FIG. 2). After the electric power supply from the inverter 113c to the turning electric motor EM2 is cut off, the processing returns to step S1.

In step S4, the travel control section 113a2 controls the inverters 113c to supply the electric power from the inverters 113c to the turning electric motor EM2. That is, the electric power is supplied from the battery 111d to the turning electric motor EM2 in the rotational state C2 during the straight travel of the work vehicle 1. In detail, the travel control section 113a2 outputs, to the inverters 113c, a command for setting the rotational speed RM of the turning electric motor EM2 to the target rotational speed RT of the turning electric motor EM2 (0 rpm in the present embodiment). Based on this command, the inverter 113c supplies the electric power from the battery 111d to the turning electric motor EM2. For example, the inverter 113c reduces (slightly reduces) the electric power supplied to the turning electric motor EM2 by a predetermined amount at constant time intervals. Consequently, the rotational speed RM of the turning electric motor EM2 is gradually reduced (step S5).

In the case where the electric power is supplied from the inverter 113c to the turning electric motor EM2 and the turning electric motor EM2 is controlled, for example, the steering shaft TM11 rotates by the rotary power of the turning electric motor EM2 that is transmitted via the second gear train TM10. That is, the steering shaft TM11 rotates in response to the rotation of the turning electric motor EM2.

In step S6, similar to step S2, the travel control section 113a2 determines whether the turning electric motor EM2 is brought into the stopped state C1. Since the determination in step S6 is the same as the determination in step S2, the detailed description is omitted. If the turning electric motor EM2 is in the rotational state C2 (No in step S6), the processing returns to step S4. Consequently, the processing in step S4 and step S5 is repeated until the turning electric motor EM2 is brought into the stopped state C1. If the turning electric motor EM2 is brought into the stopped state C1 (Yes in step S6), the processing proceeds to step S3. Accordingly, when being shifted from the stopped state C1 to the rotational state C2 during the straight travel of the work vehicle 1, the turning electric motor EM2 returns into the stopped state C1. That is, when the difference occurs between the rotational speed of the turning electric motor EM2 and the target rotational speed RT of the turning electric motor EM2 during the straight travel of the work vehicle 1, the rotational speed of the turning electric motor EM2 returns to the target rotational speed RT.

According to the above configuration, the following effects can be exerted when the straight-travel electric motor EM1 is driven to cause the work vehicle 1 to travel straight. In detail, for example, even in the case where some of the straight-travel power is unintentionally input to the turning power transmission path, and the turning electric motor EM2 thereby rotates at the different rotational speed from the target rotational speed RT (0 rpm in the present embodiment), it is possible to maintain the rotational speed RM of the turning electric motor EM2 at the target rotational speed RT. In the case where the rotational speed RM of the turning electric motor EM2 is maintained at the target rotational speed RT, the rotation of the turning electric motor EM2 is stopped (the turning electric motor EM2 is brought into a fixed state). As a result, it is possible to prevent the input straight-travel power from being further transmitted, and this power does not function as the turning power. Thus, the generation of the unintended turning power in the work vehicle 1 is avoided, and the work vehicle 1 can reliably travel straight. As it has been described so far, even when some of the straight-travel power is input to the turning power transmission path that is coupled to the turning electric motor EM2, a straight travel property of the work vehicle 1 can be ensured.

The following configuration is desirable from a viewpoint of reliably realizing a configuration that, when the difference occurs between the rotational speed RM of the turning electric motor EM2 and the target rotational speed RT during the straight travel of the work vehicle 1, the rotational speed RM of the turning electric motor EM2 returns to the target rotational speed RT. That is, as in the present embodiment, it is desirable that the turning electric motor EM2 returns to the stopped state C1 when being shifted from the stopped state C1 to the rotational state C2.

The following configuration is desirable from a viewpoint of enabling the control of the turning electric motor EM2 during the straight travel of the work vehicle 1 to ensure the straight travel property of the work vehicle 1 while suppressing electric power consumption of the work vehicle 1 (the turning electric motor EM2) to extend an operating time of the work vehicle 1. That is, as in the present embodiment, it is desirable that the electric power is supplied from the battery 111d to the turning electric motor EM2 in the rotational state C2, and the electric power supply from the battery 111d is cut off in the stopped state C1.

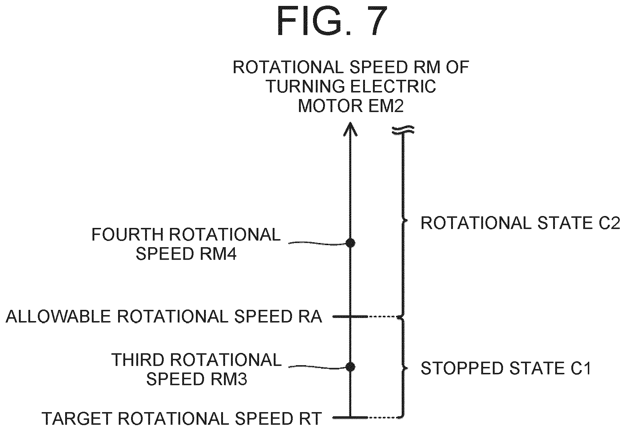

Here, a description will be made on a modified example of the state (the stopped state C1 or the rotational state C2) of the turning electric motor EM2 with reference to FIG. 7. FIG. 7 is an explanatory view illustrating the modified example of the state of the turning electric motor EM2. In the modified example, in the case where the work vehicle 1 travels straight, the stopped state C1 includes the following state in addition to the state where the rotational speed RM of the turning electric motor EM2 matches the target rotational speed RT (0rpm in the present embodiment). In detail, the stopped state C1 includes a state where the rotational speed RM of the turning electric motor EM2 differs from the target rotational speed RT but is lower than an allowable rotational speed RA (for example, a slightly higher rotational speed than 0 rpm) (for example, see a third rotational speed RM3 in FIG. 7). That is, the stopped state C1 of the turning electric motor EM2 may include a state where the turning electric motor EM2 is rotating at the rotational speed RM that is lower than the allowable rotational speed RA.

The rotational state C2 includes a state where the rotational speed RM of the turning electric motor EM2 is equal to or higher than the allowable rotational speed RA among the states where the rotational speed RM of the turning electric motor EM2 differs from the target rotational speed RT (for example, see a fourth rotational speed RM4 in FIG. 7). That is, the state where the turning electric motor EM2 is rotating at the rotational speed RM that is lower than the allowable rotational speed RA may be excluded from the rotational state C2 of the turning electric motor EM2.

The following configuration is desirable from a viewpoint of reliably securing a time during which the electric power supply from the battery 111d to the turning electric motor EM2 is cut off, and reliably extending (increasing) the operating time of the work vehicle 1. That is, as in the present modified example, it is desirable that the stopped state C1 of the turning electric motor EM2 includes the state where the turning electric motor EM2 is rotating at the rotational speed RM that is lower than the allowable rotational speed RA.

### [6. Modified Example of Control Related to Turning Electric Motor During Straight Travel]

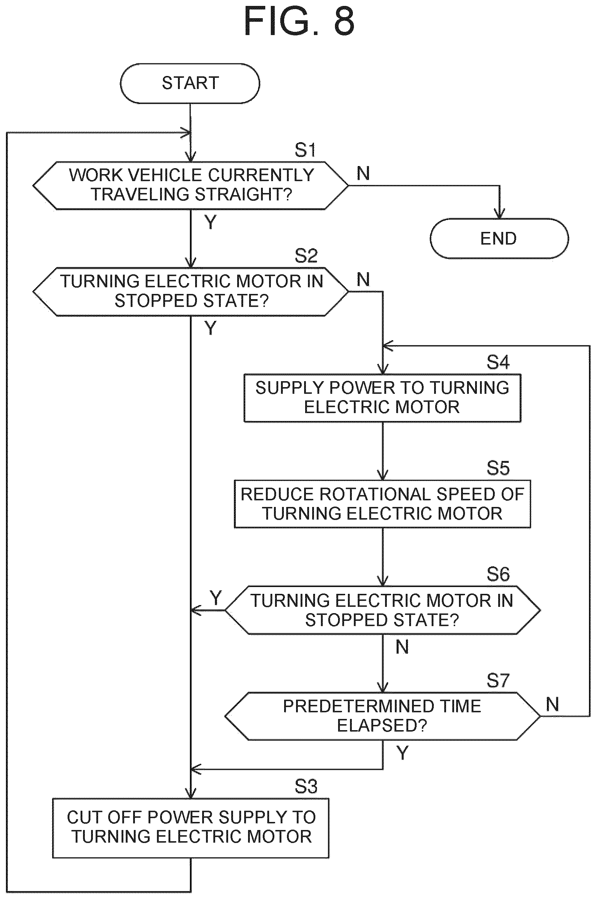

A description will be made on a modified example of the control related to the turning electric motor EM2 during the straight travel of the work vehicle 1. FIG. 8 is a flowchart illustrating a flow of the modified example of the control related to the turning electric motor EM2 during the straight travel of the work vehicle 1. The flowchart illustrated in FIG. 8 is the same as the flowchart illustrated in FIG. 7 except that step S7 is added. Thus, the following description will be centered on these different points, and the same points will not be described.

In step S6, if the turning electric motor EM2 is brought into the stopped state C1 (Yes in step S6), the processing proceeds to step S3. If the turning electric motor EM2 is not in the stopped state C1, that is, in the rotational state C2 (No in step S6), the processing proceeds to step S7.

In step S7, the travel control section 113a2 determines whether a predetermined time (for example, one second) has elapsed from the start of the electric power supply from the battery 111d to the turning electric motor EM2, that is, from the first execution of the processing in step S4. If the predetermined time has elapsed (Yes in step S7), the processing proceeds to step S3. As described above, in step S3, the electric power supply from the inverters 113c to the turning electric motor EM2 is cut off by the control of the inverter 113c by the travel control section 113a2. That is, in the case where the predetermined time elapses after the start of the electric power supply from the battery 111d to the turning electric motor EM2, the electric power supply from the battery 111d is cut off.

If the predetermined time has not elapsed (No in step S7), the processing returns to step S4. Accordingly, the processing in step S4 and step S5 is repeated until the turning electric motor EM2 is brought into the stopped state C1 or the predetermined time elapses. As described above, in step S4 and step S5, the electric power is supplied from the inverters 113c to the turning electric motor EM2 by the control of the inverter 113c by the travel control section 113a2. Consequently, the rotational speed RM of the turning electric motor EM2 is gradually reduced. That is, in the case where the rotational speed RM of the turning electric motor EM2 is gradually reduced within the predetermined time (before the predetermined time elapses), and the turning electric motor EM2 is brought into (returns to) the stopped state C1 (Yes in step S6), the processing proceeds to step S3. Alternatively, in the case where the rotational speed RM of the turning electric motor EM2 is gradually reduced, and the predetermined time elapses (Yes in step S7) when the turning electric motor EM2 is in the rotational state C2 (does not return to the stopped state C1), the processing proceeds to step S3.

For example, the turning electric motor EM2 temporarily rotates at the different rotational speed from the turning electric motor EM2 (0 rpm in the present embodiment), and stops rotating thereafter. In such a case, the rotational speed RM of the turning electric motor EM2 is naturally reduced due to frictional resistance in the travel power transmission section TM, or the like. Accordingly, in this case, the turning electric motor EM2 naturally returns to the stopped state C1 even when the electric power is not supplied from the battery 111d to the turning electric motor EM2 and the turning electric motor EM2 does not (forcibly) return to the stopped state C1 from the rotational state C2. In particular, in such a case, the following configuration is desirable from a viewpoint of suppressing the electric power consumption of the work vehicle 1 (the turning electric motor EM2). That is, as in the modified example, it is desirable that, in the case where the predetermined time

(for example, one second) elapses after the electric power supply from the battery 111d is started, the electric power supply from the battery 111d to the turning electric motor EM2 is cut off.

When the turning electric motor EM2 is smoothly shifted from the rotational state C2 to the stopped state C1, breakage of a member (for example, the second gear train TM10, the steering shaft TM11, or the like) that is directly or indirectly coupled to the turning electric motor EM2 is avoided. From this viewpoint, as in the modified example, it is desirable that the turning electric motor EM2 returns to the stopped state C1 by gradually reducing the rotational speed RM of the turning electric motor EM2 within the predetermined time.

### [7. Supplementary Notes]

The work vehicle 1 that has been described in the present embodiment can also be expressed as a work vehicle described in the following supplementary notes.

A work vehicle in Supplementary Note (1) includes:
a straight-travel electric motor that generates straight-travel power; and
a turning electric motor that generates turning power, in which
during straight travel by driving the straight-travel electric motor,
a rotational speed of the turning electric motor returns to a target rotational speed of the turning electric motor when becoming different from the target rotational speed.

In the work vehicle in Supplementary Note (1), in a work vehicle in Supplementary Note (2),
during the straight travel by driving the straight-travel electric motor,
when being shifted from a stopped state to a rotational state, the turning electric motor returns to the stopped state.

In the work vehicle described in Supplementary Note (2), a work vehicle in Supplementary Note (3) includes
a battery that stores electric power supplied to the turning electric motor,
the turning electric motor
in the rotational state, is supplied with the electric power from the battery, and
in the stopped state, is no longer supplied with the electric power from the battery.

In the work vehicle described in Supplementary Note (3), in a work vehicle in Supplementary Note (4),
the stopped state includes a state where the turning electric motor is rotating at a rotational speed that is lower than an allowable rotational speed.

In the work vehicle described in Supplementary Note (3) or (4), in a work vehicle in Supplementary Note (5),
in the case where a predetermined time elapses after electric power supply from the battery to the turning electric motor is started, the electric power supply from the battery is cut off.

In the work vehicle described in Supplementary Note (5), in a work vehicle in Supplementary Note (6),
within the predetermined time, the rotational speed of the turning electric motor is gradually reduced, and the turning electric motor returns to the stopped state.

The description has been made so far on the embodiment of the present invention. However, the scope of the present invention is not limited thereto, and the present invention can be expanded or modified within the scope that does not depart from the gist of the invention.

### INDUSTRIAL APPLICABILITY

The present invention is applicable to work vehicles such as an agricultural machine and a construction machine.

### REFERENCE SIGNS LIST

1 work vehicle
11 1d battery
C1 stopped state
C2 rotational state
EM1 straight-travel electric motor
EM2 turning electric motor
RA allowable rotational speed
RM rotational speed (rotational speed of turning electric motor)
RT target rotational speed (target rotational speed of turning electric motor)

## Claims

1. A work vehicle comprising:
a straight-travel electric motor that generates straight-travel power; and
a turning electric motor that generates turning power, wherein
during straight travel by driving the straight-travel electric motor,
a rotational speed of the turning electric motor returns to a target rotational speed of the turning electric motor when becoming different from the target rotational speed.

2. The work vehicle according to claim 1, wherein
during the straight travel by driving the straight-travel electric motor,
when being shifted from a stopped state to a rotational state, the turning electric motor returns to the stopped state.

3. The work vehicle according to claim 2 further comprising:
a battery that stores electric power supplied from the turning electric motor, wherein
the turning electric motor
in the rotational state, is supplied with the electric power from the battery, and
in the stopped state, is no longer supplied with the electric power from the battery.

4. The work vehicle according to claim 3, wherein
the stopped state includes a state where the turning electric motor is rotating at a rotational speed that is lower than an allowable rotational speed.

5. The work vehicle according to claim 3 or 4, wherein
in the case where a predetermined time elapses after electric power supply from the battery to the turning electric motor is started, the electric power supply from the battery to the turning electric motor is cut off.

6. The work vehicle according to claim 5, wherein
within the predetermined time, the rotational speed of the turning electric motor is gradually reduced, and the turning electric motor returns to the stopped state.
